# FASCICULE DE BREVET EUROPEEN

(11) **EP 0 787 239 B1**
(45) Date de publication et mention de la délivrance du brevet: **02.06.1999**
(21) Numéro de dépôt: 95934698.2
(22) Date de dépôt: 13.10.1995
(51) Int. Cl.: E04H 4/14, B01D 35/26

(54) **PANNEAU FILTRANT POUR BASSIN DE PISCINES**
FILTERDECKE FÜR SCHWIMMBÄDER
FILTER PANEL FOR SWIMMING POOL

(30) Priorité: 17.10.1994 FR 9412773
(43) Date de publication de la demande: 06.08.1997
(73) Titulaire: PISCINES DESJOYAUX SA, 42480 La Fouillouse (FR)
(72) Inventeur: DESJOYAUX, Jean, Louis, F-42580 L'Etrat (FR); DESJOYAUX, Pierre, Louis, F-42480 La Fouillouse (FR); JANDROS, Catherine, F-42580 L'Etrat (FR)
(74) Mandataire: Thivillier, Patrick
(86) Numéro de dépôt international: FR9501341
(87) Numéro de publication internationale: WO9612075

(56) Documents cités:
- FR-A- 2 682 981
- US-A- 2 980 256
- US-A- 3 532 217

## Description

L'invention concerne plus particulièrement, la filtration de l'eau des bassins de piscines.

De manière générale, la filtration est obtenue au moyen d'un ou plusieurs filtres, qui peuvent être de structures diverses, les filtres étant montés en combinaison avec un circuit d'aspiration et de refoulement de l'eau. Différentes solutions peuvent être utilisées pour assurer cette fonction.

Par exemple, l'ensemble des moyens de pompage et de filtration peuvent être disposés dans un local technique situé à l'extérieur du bassin. Ou bien, de tels moyens peuvent être intégrés dans un bloc compact, monté en combinaison avec les panneaux de la piscine.

Enfin et comme enseigné par le brevet FR-A-2682981 dont le demandeur de la présente est titulaire, les moyens de pompage et de filtration peuvent être intégrés dans un panneau susceptible d'être monté en combinaison avec les autres panneaux constitutifs du bassin de la piscine. Ce panneau filtrant conforme au préambule de la revendication 1 est obtenu par injection de matières plastiques. Les moyens de pompage et de filtration sont montés dans deux compartiments juxtaposés, disposés l'un à côté de l'autre.

A partir de cette conception, on a voulu améliorer les caractéristiques du panneau filtrant, au niveau de sa conception technique, de sa structure, de ses agencements et de son mode de fabrication, que l'on a voulu simplifier pour diminuer, de manière significative, les coûts.

On a voulu également améliorer l'étanchéité et simplifier l'intégration d'un projecteur.

Pour résoudre ce problème, il a été conçu et mis au point un panneau filtrant conforme aux caractéristiques de la revendication 1.

Cette combinaison de caractéristiques, permet d'obtenir un panneau filtrant pour piscine en appliquant la technique du rotomoulage.

Toujours en ayant pour objectif d'augmenter la rigidité, le panneau présente, entre la face avant et la face arrière, une entretoise.

Pour résoudre le problème posé d'augmenter la capacité de filtration, les moyens de filtration sont constitués par deux cartouches filtrantes disposées verticalement en combinaison avec une plaque de positionnement, lesdites cartouches permettant la circulation naturelle de l'eau de haut en bas.

Les tuyaux d'aspiration et de refoulement reposent sur des berceaux d'appui que présente la cloison de séparation, en combinaison avec des joints de compression et une plaque thermoformée.

Un autre problème que se propose de résoudre l'invention, est de simplifier le montage et l'adaptation d'un ou plusieurs projecteurs.

Un tel problème est résolu en ce que la face avant du panneau intègre, lors de l'opération de rotomoulage, des agencements pour le positionnement d'au moins un projecteur.

L'invention est exposée, ci-après plus en détail à l'aide des dessins annexés, dans lesquels :

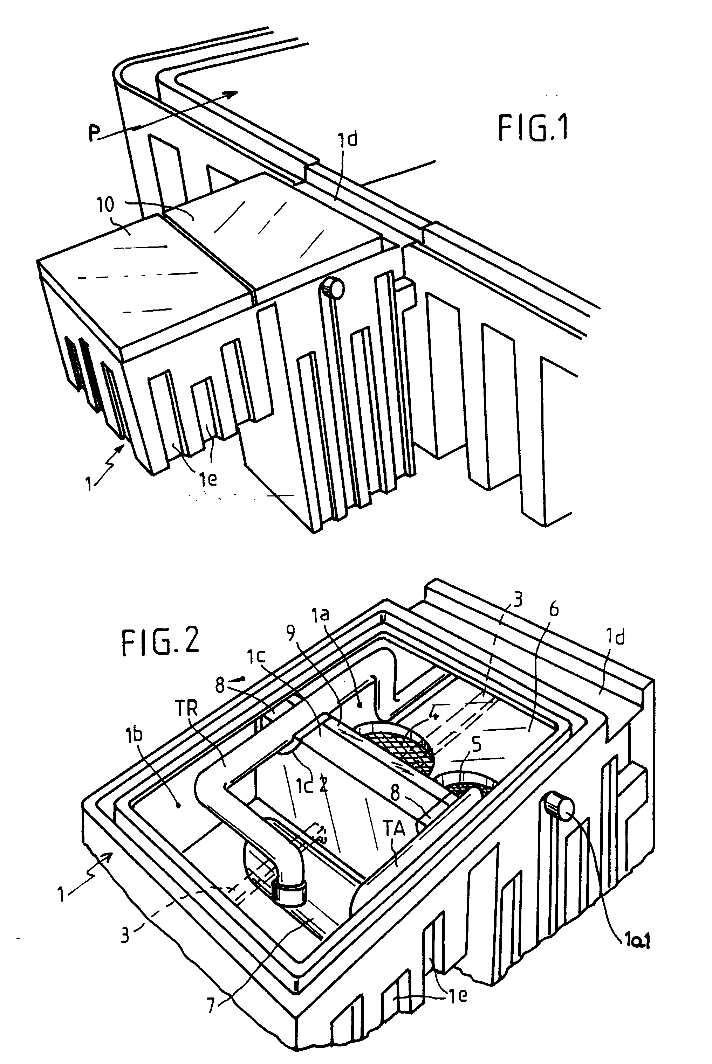

La figure 1 est une vue en perspective d'un bassin de piscine équipé d'un panneau filtrant selon l'invention.

La figure 2 est une vue en perspective de l'intérieur du panneau filtrant.

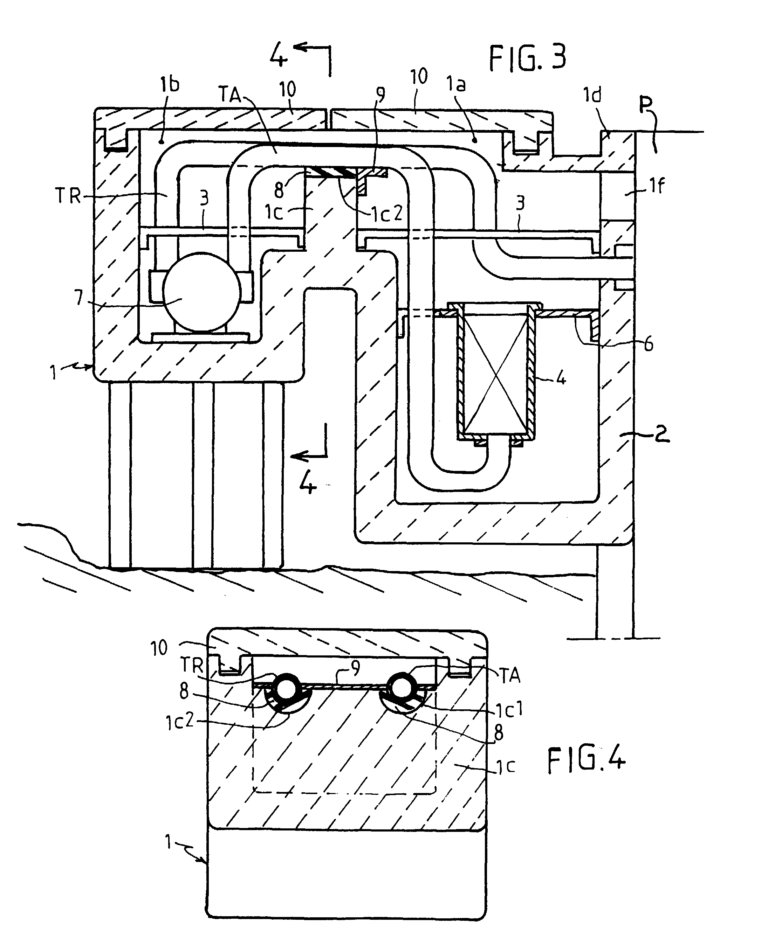

La figure 3 est une vue en coupe longitudinale du bloc.

La figure 4 est une vue en coupe transversale considérée selon la ligne 4.4 de la figure 3.

Selon l'invention, le panneau comprend un corps (1) obtenu par rotomoulage, en étant conformé pour constituer un bloc compact présentant deux compartiments internes indépendants (1a) et (1b) séparés par une cloison verticale (1c).

On rappelle, d'une manière parfaitement connue pour un homme du métier, que le rotomoulage consiste en un moulage par rotation, d'une pièce creuse en matières plastiques, notamment en polyéthylène.

Plus particulièrement et comme le montre la figure 2, les deux compartiments (1a) et (1b) sont de hauteurs différentes et sont disposés l'un derrière l'autre. Le compartiment (la) de plus grande hauteur, est agencé pour être rempli d'eau et présente des moyens de filtration. Ce compartiments (la) est donc situé immédiatement au niveau de la face avant (1d) du bloc, destiné à être positionné en continuité avec les autres panneaux constitutifs du bassin (P), comme il sera indiqué dans la suite de la description.

La face avant du bloc (1) qui constitue le panneau filtrant, présente un élément de renfort facial (2), sous forme par exemple, d'une plaque. Cet élément est nécessaire pour tenir compte de la poussée de l'eau, au moment du remplissage du bassin, tant que le compartiment (la) n'est pas à son tour rempli.

On rappelle en effet, que la face avant (1d) du panneau est d'épaisseur réduite, compte-tenu du procédé de rotomoulage.

A noter que les autres faces du bloc peuvent présenter des nervures de rigidité (le).

De même, toujours en ayant pour objectif d'augmenter la rigidité, l'ensemble du bloc présente, entre la face avant et la face arrière, une entretoise (3).

Les moyens de filtration sont constitués par deux cartouches filtrantes (4) et (5) de tout type connu et approprié, disposées verticalement, en combinaison avec une plaque de positionnement (6), logée dans le compartiment (la). Ces cartouches filtrantes (4) et (5) permettent la circulation naturelle de l'eau, de haut en bas. La face avant (1d) du panneau présente une ouverture (1f) pour mettre en communication, le haut du compartiment interne (1a) avec le bassin.

La conception des cartouches filtrantes (4) et (5) n'est pas décrite en détail car ces dernières peuvent faire l'objet de différentes variantes d'exécutions. Notamment, des cartouches sont du type de celle définies dans le brevet FR 2652758.

Le compartiment (1b) est étanche, en étant séparé du compartiment de filtration (1a) par la cloison (1c) et présente les moyens de pompage (7), qui peuvent être exécutés selon différentes formes de réalisation. Par exemple, ces moyens peuvent être constitués par une pompe bi-vitesses ou par deux pompes indépendantes mono-vitesses couplées deux à deux, permettant ainsi d'assurer des débits de recyclage, tels qu'exigés par arrêté ministériel, dans le cas d'une utilisation publique de la piscine. Dans ce cas d'application, le panneau est combiné avec tout agencement et accessoire couramment utilisés, tel que dosage de chlore, compteur d'eau ... afin de correspondre à la reglementation en vigueur.

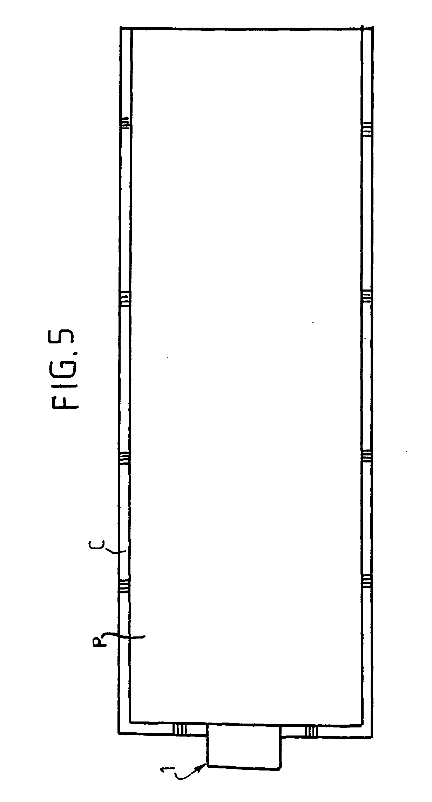

Les tuyaux d'aspiration (TA) et de refoulement (TR) montés en combinaison avec les moyens de filtration, traversent d'une manière étanche, la cloison verticale de séparation (1c). Dans ce but, les tuyaux (TA) et (TR) reposent sur des berceaux d'appui (1c1) (1c2) que présente la cloison, en combinaison avec des joints de compression (8) et une plaque thermoformée (9) fixée sur ladite cloison (1c) (figure 4). A noter également que la plaque (9) est profilée pour faire office d'anti-débordement, évitant à l'eau contenue dans le compartiment (1a), d'aller inopinément dans le compartiment étanche (1b) recevant la pompe.

La cloison de séparation (1c), du côté du compartiment étanche (1b) permet la fixation de différents éléments de raccordement électrique notamment.

Les parois latérales du compartiment (1a) présentent des évidements (1a1) pour le passage et la circulation de l'air. De même, le fond du compartiment étanche (1b) peut présenter un orifice de vidange, en cas de fuites d'eau accidentelles dans ce compartiment.

Compte-tenu de la conception du panneau filtrant selon l'invention, notamment de son procédé de fabrication par rotomoulage et, compte-tenu du fait que le compartiment (1b) recevant les moyens de pompage est situé à l'arrière, il est aisé de monter un projecteur au niveau de la face avant du panneau, c'est-à-dire de la face en communication avec le compartiment (1a) recevant les moyens de filtration et rempli d'eau. Il n'est plus, dans ce cas, nécessaire de prévoir des moyens supplémentaires d'étanchéité, étant donné que le projecteur est en liaison direct avec le compartiment de filtration. Il suffit de sélectionner un projecteur dont la conception le rend parfaitement étanche.

La fixation du projecteur sur la face correspondante du panneau, s'effectue par tout moyen connu et approprié.

Les deux compartiments (1a) et (1b) sont obturés chacun, par un couvercle amovible (10) coiffant l'ensemble du panneau - bloc (1).

La face avant (1d) du panneau présente des ailes latérales équipées d'agencements pour l'accouplement de l'ensemble du panneau (1), d'une manière étanche, avec les autres panneaux (P) constitutifs du bassin de piscine. De même, le compartiment arrière (1b) coopère avec un massif en béton, afin d'absorber les différents efforts de poussée.

On prévoit également de faire circuler l'eau, en combinaison avec les organes de filtration, directement par le dessus du panneau, afin que l'eau du bassin pénètre par gravité au travers desdits organes de filtration, afin d'obtenir une filtration dite par débordement.

Cette filtration par débordement, compte-tenu de la conception du panneau telle que décrite, peut s'effectuer selon différentes variantes.

Ce débordement peut s'effectuer par le biais d'une goulotte périphérique, qui peut être noyée dans le chaînage de la piscine, cette goulotte étant en communication avec le dessus du panneau. Cette goulotte peut être réalisée simplement sous forme d'un caniveau avec une grille de débordement ou bien un tuyau en PVC peut être noyé dans le chaînage, et être en communication à différents intervalles, avec des regards apparaissant directement à la partie supérieure du chaînage et dans lesquels pourrait déborder l'eau du bassin. Bien évidemment, le tuyau collecteur est en communication avec le haut du panneau. Le débordement s'effectue, dans ce cas, directement dans le chaînage. On renvoie à la figure 5, qui montre, par une vue purement schématique, un bassin équipé du panneau filtrant (1) selon l'invention, en combinaison avec un chaînage (C) agencé pour obtenir une filtration par débordement.

A noter également que la margelle, qui ceinture normalement le bassin de la piscine, peut avoir une pente négative, pour que l'eau qui déborde soit renvoyée dans le bassin, la margelle étant, dans ce cas, percée de trous pour la mettre en communication avec le tuyau collecteur noyé dans le chaînage.

Cette filtration par débordement, trouve une application particulièrement avantageuse, dans le cas de bassins de piscine à usage public. A noter que dans ce cas, la pompe peut être montée dans un local indépendant.

Les avantages ressortent bien de la description, en particulier on souligne et on rappelle :
- la fabrication par rotomoulage permettant d'obtenir une meilleure étanchéité,
   - la diminution du coût de fabrication,
   - la facilité d'intégration d'un projecteur,
- l'augmentation du volume interne, permettant d'augmenter la capacité de filtration,
   - la possibilité d'utiliser une pompe bi-vitesses ou deux pompes mono-vitesses indépendantes couplées deux à deux,
   - la possibilité de combiner le panneau filtrant, avec différents agencements du bassin, afin d'obtenir une filtration dite par débordement,
- l'application du panneau filtrant dans le cas de bassins à usage public.

## Revendications

1. Panneau filtrant pour bassin de piscines, comprenant un bloc compact présentant deux compartiments internes indépendants (1a) (1b), recevant des moyens de pompage (7) et de filtration (4-5) caractérisé en ce que :
- le bloc est obtenu par rotomoulage,
- les deux compartiments (1a) (1b) sont de hauteurs différentes et sont disposés l'un derrière l'autre,
- le compartiment (1a) de plus grande hauteur, est agencé pour être rempli d'eau et présente les moyens de filtration (4-5),
- le compartiment (1a) est situé immédiatement au niveau de la face avant (1d) du bloc,
- la face avant du bloc présente un élément de renfort facial (2),
- le compartiment (1b) est étanche en étant séparé du compartiment (1a) par une cloison (1c),
- le compartiment (1b) présente les moyens de pompage (7),
- des tuyaux d'aspiration (TA) et de refoulement (TR) sont montés en combinaison avec les moyens de filtration et traversent de manière étanche, la cloison verticale de séparation (1c).
- les deux compartiments (1a) (1b) sont obturés chacun par un couvercle amovible (10) coiffant l'ensemble du bloc,

2. Panneau selon la revendication 1, caractérisé en ce qu'il présente entre la face avant et la face arrière, une entretoise (3).

3. Panneau selon la revendication 1, caractérisé en ce que les moyens de filtration sont constitués par deux cartouches filtrantes (4) (5) disposées verticalement en combinaison avec une plaque de positionnement (6), lesdites cartouches permettant la circulation naturelle de l'eau de haut en bas.

4. Panneau selon la revendication 1, caractérisé en ce que les tuyaux reposent sur des berceaux d'appui que présente la cloison de séparation, en combinaison avec des joints de compresion (8) et une plaque thermoformée (9) faisant office d'anti-débordement.

5. Panneau selon la revendication 1, caractérisé en ce que sa face intègre, lors de l'opération de rotomoulage, des agencements pour le positionnement d'au moins un projecteur.

6. Panneau selon la revendication 1, caractérisé en ce que le compartiment (1a) recevant les moyens de filtration présente des agencements pour être en communication avec l'extérieur.

7. Panneau selon la revendication 1, caractérisé en ce que le fond du compartiment (1b) recevant les moyens de pompage présente un orifice de vidange.

8. Panneau selon la revendication 1, caractérisé en ce qu'il présente des agencements aptes à permettre sa fixation avec les autres panneaux constitutifs du bassin.

9. Panneau selon la revendication 1, caractérisé en ce qu'il est combiné avec des agencements du bassin, pour obtenir une filtration par débordement.

## Patentansprüche

1. Filterplatte für Schwimmbadbecken bestehend aus einem kompakten Block mit zwei separaten, Pump- (7) und Filtereinrichtungen (4-5) aufnehmenden Innenräumen (1a) (1b), dadurch gekennzeichnet, daß:
der Block durch Rotationsformen hergestellt wird,
die beiden Innenräume (1a) (1b) unterschiedlich hoch und hintereinander angeordnet sind,
der höhere Raum (1a) für das Auffüllen mit Wasser ausgelegt ist und die Filtereinrichtungen (4-5) umfaßt,
der Raum (1a) unmittelbar im Bereich der Vorderseite (1d) des Blocks liegt,
die Vorderseite des Blocks ein Frontverstärkungselement (2) aufweist,
der Raum (1b) abgedichtet und durch eine Zwischenwand (1c) vom Raum (la) getrennt ist,
der Raum (1b) die Pumpeinrichtungen (7) aufweist,
in Verbindung mit den Filtereinrichtungen Ansaugrohre (TA) und Druckrohre (TR) angebracht sind und abgedichtet die senkrecht Trennwand (1c) durchqueren,
die beiden Räume (1a) (1b) jeweils durch einen abnehmbaren Deckel (10) über dem gesamten Block verschlossen sind.

2. Platte nach Anspruch 1, dadurch gekennzeichnet, daß zwischen der Vorder- und Rückseite ein Distanzstück vorhanden ist.

3. Platte nach Anspruch 1, dadurch gekennzeichnet, daß die Filtereinrichtungen aus zwei Filtereinsätzen (4) (5) bestehen, die in Verbindung mit einer Positionierplatte (6) senkrecht angeordnet sind, wobei diese Einsätze die natürliche Wasserzirkulation von oben nach unten ermöglichen.

4. Platte nach Anspruch 1, dadurch gekennzeichnet, daß die Rohre in Verbindung mit Kompressionsdichtungen (8) und einer als Überlaufschutz dienenden warmgeformten Platte (9) auf Auflagern der Trennwand ruhen.

5. Platte nach Anspruch 1, dadurch gekennzeichnet, daß auf der Vorderseite beim Rotationsformen Vorkehrungen für die Positionierung von mindestens einem Scheinwerfer integriert werden.

6. Platte nach Anspruch 1, dadurch gekennzeichnet, daß der die Filtereinrichtungen aufnehmende Raum (1a) Vorkehrungen für die Verbindung nach außen aufweist.

7. Platte nach Anspruch 1, dadurch gekennzeichnet, daß der Boden des die Pumpeinrichtungen aufnehmenden Raumes (1b) eine Ablaßöffnung aufweist.

8. Platte nach Anspruch 1, dadurch gekennzeichnet, daß sie Vorkehrungen aufweist, die geeignet sind, die Befestigung an anderen Beckenplatten zu ermöglichen.

9. Platte nach Anspruch 1, dadurch gekennzeichnet, daß sie mit Vorkehrungen des Beckens kombiniert ist, um eine Überlauffilterung zu erzielen.

## Claims

1. Filter panel for swimming pools, comprising a compact unit which has two independent internal compartments (1a) (1b) containing pumping (7) and filtering (4-5) means, characterized in that:
- the unit is obtained by rotational moulding,
- the two compartments (1a) (1b) are of different heights and are arranged one behind the other,
- the taller compartment (1a) is designed to be filled with water and has the filtering means (4-5),
- the compartment (1a) is located immediately at the level of the front face (ld) of the unit,
- the front face of the unit has a facial reinforcing element (2),
- the compartment (1b) is watertight, being separated from the compartment (1a) by a partition (1c),
- the compartment (1b) contains the pumping means (7),
- the intake pipe (TA) and delivery pipe (TR) are mounted in combination with the filtering means and pass in watertight manner through the vertical separating partition (1c),
- the two compartments (1a) (1b) are each closed by a removable lid (10) covering the entire unit.

2. Panel according to Claim 1, characterized in that it has a brace (3) between the front face and the rear face.

3. Panel according to Claim 1, characterized in that the filtering means consist of two filter cartridges (4) (5) arranged vertically in combination with a positioning plate (6), the said cartridges allowing the water to flow naturally from the top downwards.

4. Panel according to Claim 1, characterized in that the pipes rest on support brackets exhibited by the separating partition, combined with compression seals (8) and a thermoformed plate (9) which acts as overflow protection.

5. Panel according to Claim 1, characterized in that its face incorporates, from the rotational-moulding operation, arrangements for installing at least one lamp.

6. Panel according to Claim 1, characterized in that the compartment (1a) containing the filtering means has arrangements to allow it to communicate with the outside.

7. Panel according to Claim 1, characterized in that the bottom of the compartment (1b) containing the pumping means has a drainage hole.

8. Panel according to Claim 1, characterized in that it has arrangements capable of allowing it to be attached to the other panels which make up the pool.

9. Panel according to Claim 1, characterized in that it is combined with pool arrangements to obtain overflow filtration.
